# FASCICULE DE BREVET EUROPEEN

(11) **EP 3 367 525 B1**
(45) Date de publication et mention de la délivrance du brevet: **10.06.2020**
(21) Numéro de dépôt: 18158151.3
(22) Date de dépôt: 22.02.2018
(51) Int. Cl.: H02G 3/18, H01H 9/18, H01H 13/83

(54) **APPAREIL ELECTRONIQUE TEL QU'UNE SONNETTE**
ELEKTRONISCHES GERÄT WIE EINE TÜRKLINGEL
ELECTRONIC APPARATUS SUCH AS A DOORBELL

(30) Priorité: 22.02.2017 FR 1751400
(43) Date de publication de la demande: 29.08.2018
(73) Titulaire: HAGER SECURITY (SAS), FR-38920 Crolles (FR)
(72) Inventeur: ARGOUD PUY, Mikael, 38410 VAULNAVEYS LE HAUT (FR); BUIRET-MONTAGNY, Jean Luc, 38400 ST MARTIN D'HERES (FR); NIETO, Yves, 73000 CHAMBERY (FR)
(74) Mandataire: Nuss, Laurent

(56) Documents cités:
- WO-A1-03/071565
- DE-A1- 3 535 217
- DE-B3-102013 102 598
- DE-U1-202006 006 354
- US-A- 4 247 747
- US-A- 4 343 975
- US-A1- 2014 268 630

## Description

La présente invention concerne le domaine des appareils électroniques tel qu'une sonnette.

Une sonnette est un dispositif d'avertissement sonore qui permet à un visiteur d'alerter l'habitant de sa venue et qui est généralement disposé à l'extérieur d'une habitation. La sonnette peut donc être exposée aux intempéries et il est donc dans ce cas préférable que la sonnette soit étanche pour qu'elle soit protégée contre la pluie ou l'humidité. Par ailleurs, pour permettre la visibilité de la sonnette dans l'obscurité, l'organe d'actionnement de la sonnette est généralement rétroéclairé. De manière connue, une source lumineuse est disposée à l'arrière de l'organe d'actionnement pour rétroéclairer l'organe d'actionnement.

Les documents US4343975A, DE3535217A1, US4247747A, WO03/071565A1 et DE102013102598B3 divulguent des appareils électroniques de cette sorte. Toutefois, cette configuration présente l'inconvénient de générer une perte d'espace conséquente à l'arrière de l'organe d'actionnement.

La présente invention a pour but de proposer une solution de rétroéclairage permettant de limiter l'encombrement sous l'organe d'actionnement et qui permette de pallier les principaux inconvénients de la solution connue précitée et de surmonter ses limitations majeures.

L'invention concerne un appareil électronique, comprenant un boîtier formant un logement délimité au moins par une paroi périphérique, une façade de support et une façade d'interaction,
la façade d'interaction comprenant une paroi dans laquelle est ménagée une ouverture traversante, paroi par rapport à laquelle un organe d'actionnement, apte et destiné à être relié à un avertisseur sonore, est monté **mobile,**
l'organe d'actionnement comprenant une interface d'appui obturant ladite ouverture **traversante,**
ledit logement recevant une carte électronique comprenant un support sur lequel est monté une pluralité de composants électroniques comprenant au moins un actionneur et une source lumineuse apte et destinée à émettre un rayonnement lumineux pour illuminer au moins en partie l'organe **d'actionnement,**
ladite carte électronique étant apte et destinée à être reliée à et alimentée par une alimentation électrique pour alimenter les composants électroniques,
ledit organe d'actionnement interagissant avec ledit actionneur monté sur ladite carte électronique et étant mobile par rapport audit actionneur entre une position de repos dans laquelle l'actionneur n'est pas actionné par l'organe d'actionnement et une position d'actionnement dans laquelle l'actionneur est actionné par l'organe d'actionnement, ladite au moins une source lumineuse étant déportée par rapport à l'ouverture traversante de la paroi de la façade d'interaction et est disposée entre la paroi de la façade d'interaction et le support de la carte électronique,
l'organe d'actionnement est constitué d'au moins un matériau transparent ou translucide,
l'organe d'actionnement comprend une première zone de guidage optique s'étendant dans le prolongement de l'interface d'appui et en regard d'une face interne de la paroi de la façade d'interaction et en direction de la source lumineuse pour transmettre un rayonnement lumineux émis par ladite au moins une source lumineuse et entrant par une entrée de la première zone de guidage vers une sortie de la première zone de guidage laquelle débouche dans l'épaisseur de l'interface d'appui pour éclairer ladite interface d'appui, ledit appareil électronique est caractérisé en ce que l'actionneur est déporté par rapport à l'ouverture traversante et est disposé entre la paroi de la façade d'interaction et le support de la carte électronique, et en ce que l'organe d'actionnement comprend une tige d'actionnement s'étendant dans le prolongement de l'interface d'appui et en regard d'une face interne de la paroi de la façade d'interaction et en direction de l'actionneur pour transmettre une force sur l'actionneur uniquement en position d'actionnement.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en éclaté d'un appareil électronique selon l'invention,
la figure 2 est une vue de face de l'appareil électronique selon l'invention,
la figure 3 est une vue en coupe selon un plan sécant A-A de l'appareil électronique représenté à la figure 2,
la figure 4 est une vue du détail A de la figure 3,
la figure 5 est une vue en coupe selon un plan sécant D-D de l'appareil électronique représenté à la figure 2,
la figure 6 est une vue du détail B de la figure 5,
la figure 7 est une vue de dessus de l'organe d'actionnement de l'appareil électronique selon l'invention associé à un porte-étiquette,
la figure 8 est une vue en coupe selon un plan sécant C-C de l'organe d'actionnement représenté à la figure 7,
la figure 9 est une vue du détail C de la figure 8,
la figure 10 est vue en coupe selon un plan sécant B-B de l'organe d'actionnement de la figure 7,
la figure 11 est une vue de dessous de l'organe d'actionnement de l'appareil électronique selon l'invention,
la figure 12 est une vue du détail D de la figure 11,
la figure 13 est une vue en perspective de la paroi étanche de l'appareil électronique selon l'invention,
la figure 14 est une vue de dessus de la paroi étanche représentée à la figure 13,
la figure 15A est vue en coupe selon un plan sécant H-H de la paroi étanche représentée à la figure 14,
la figure 15B est une vue du détail E de la figure 15A,
la figure 16A est vue en coupe selon un plan sécant G-G de la paroi étanche représentée à la figure 14, et
la figure 16B est une vue du détail F de la figure 16A.

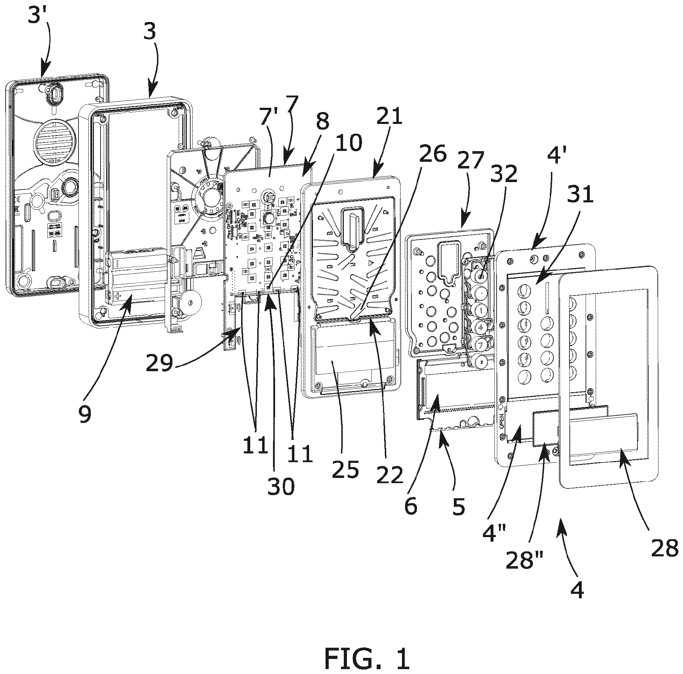

L'appareil électronique, comprend un boîtier 1 formant un logement 2 délimité au moins par une paroi périphérique 3, une façade de support 3' et une façade d'interaction 4,
la façade d'interaction 4 comprenant une paroi 4' dans laquelle est ménagée une ouverture traversante 4", paroi 4' par rapport à laquelle un organe d'actionnement 5, apte et destiné à être relié à un avertisseur sonore, est monté mobile,

l'organe d'actionnement 5 comprenant une interface d'appui 6 obturant ladite ouverture traversante 4",
ledit logement 2 recevant une carte électronique 7 comprenant un support 8 sur lequel est monté une pluralité de composants électroniques comprenant au moins un actionneur 10 et une source lumineuse 11 apte et destinée à émettre un rayonnement lumineux pour illuminer au moins en partie l'organe d'actionnement 5,
ladite carte électronique 7 étant apte et destinée à être reliée à et alimentée par une alimentation électrique 9 pour alimenter les composants électroniques 10, 11,
ledit organe d'actionnement 5 interagissant avec ledit actionneur 10 monté sur ladite carte électronique 7 et étant mobile par rapport audit actionneur 10 entre une position de repos dans laquelle l'actionneur 10 n'est pas actionné par l'organe d'actionnement 5 et une position d'actionnement dans laquelle l'actionneur 10 est actionné par l'organe d'actionnement 5 (figures 1 à 16B).

L'appareil électronique peut être une sonnette, un dispositif d'interface d'un système d'alarme, tel qu'un clavier de commande et/ou un interphone et/ou une caméra, muni d'une sonnette.

Préférentiellement, la façade de support 3' peut être destinée à être fixée à un support (non représenté) tel qu'un mur (non représenté).

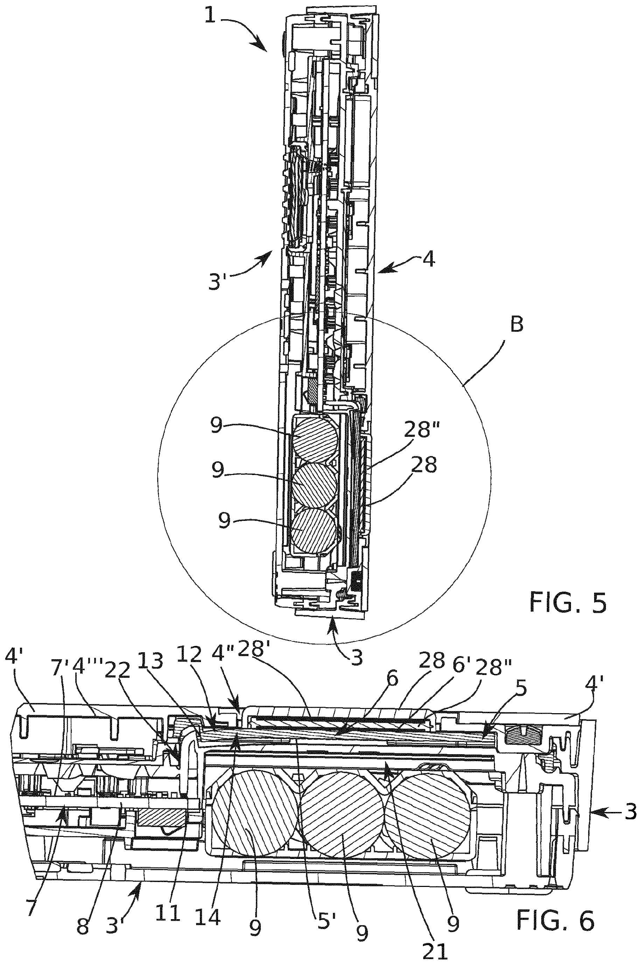

Conformément à l'invention, l'appareil électronique est caractérisé en ce que ladite au moins une source lumineuse 11 est déportée par rapport à l'ouverture traversante 4" de la paroi 4' de la façade d'interaction 4 et est disposée entre la paroi 4' de la façade d'interaction 4 et le support 8 de la carte électronique 7 (figures 1, 3 à 6),
en ce que l'organe d'actionnement 5 est constitué d'au moins un matériau transparent ou translucide,
en ce que l'organe d'actionnement 5 comprend une première zone de guidage 12 optique s'étendant dans le prolongement de l'interface d'appui 6 et en regard d'une face interne 4'" de la paroi 4' de la façade d'interaction 4 et en direction de la source lumineuse 11 pour transmettre un rayonnement lumineux émis par ladite au moins une source lumineuse 11 et entrant par une entrée 13 de la première zone de guidage 12 vers une sortie 14 de la première zone de guidage 12 laquelle débouche dans l'épaisseur de l'interface d'appui 6 pour éclairer ladite interface d'appui 6 (figures 5 et 6).

La source lumineuse 11 étant déportée par rapport à l'ouverture traversante 4", celle-ci n'est pas disposée à l'arrière de l'ouverture traversante 4" ou à l'arrière de l'interface d'appui 6. Avantageusement, cette configuration permet de libérer de l'espace à l'arrière de l'interface d'appui 6 de l'organe d'actionnement 5 et il en résulte un encombrement limité dans le logement 2 et une libération d'espace permettant par exemple d'y placer l'alimentation électrique 9. Par ailleurs, le rayonnement émis par la source lumineuse 11 est avantageusement guidé dans l'épaisseur de l'interface d'appui 6 ce qui permet d'éclairer l'interface d'appui 6 non pas par un éclairage directe d'une face interne 5' de l'organe d'actionnement 5 et avec un flux lumineux dirigé sensiblement perpendiculairement à la face interne 5' comme c'est le cas dans l'art antérieur, mais avec un flux lumineux dirigé dans l'épaisseur de l'interface d'appui 6.

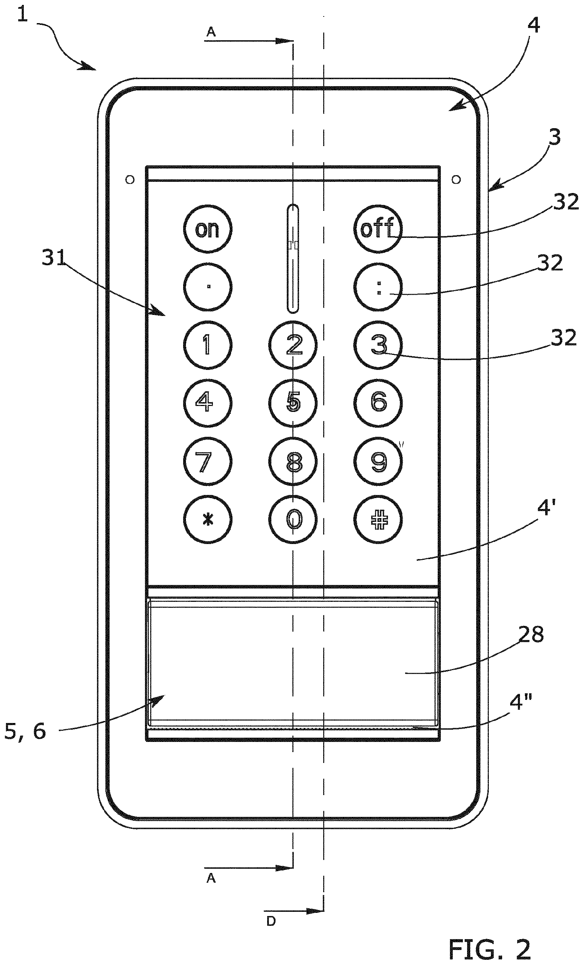

Préférentiellement, l'interface d'appui 6 peut être plane et peut présenter un contour ayant une forme sensiblement rectangulaire. L'interface d'appui 6 peut être directement visible et actionnée par l'utilisateur, lorsqu'aucun porte-étiquette 28 n'est associé à l'interface d'appui 6 comme décrit ci-après. Si un porte-étiquette 28 est associé à l'interface d'appui 6, alors l'interface d'appui 6 peut ne pas être directement visible par l'utilisateur (figure 2).

L'ouverture traversante 4" peut présenter une forme rectangulaire et présenter des dimensions sensiblement identiques aux dimensions de l'interface d'appui 6 (figures 2 à 6).

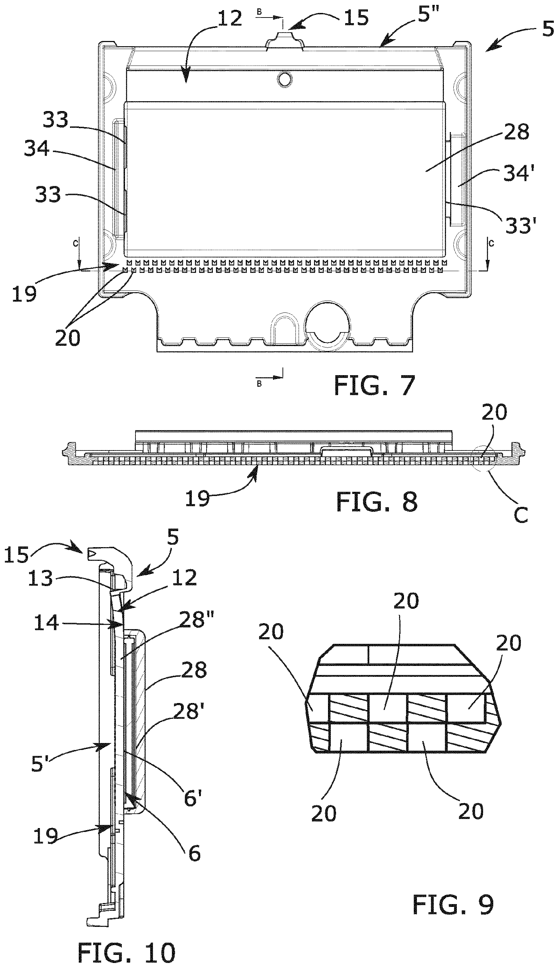

L'entrée 13 peut correspondre à une face sécante, préférentiellement sensiblement perpendiculaire, à un plan sécant transversal (plan B-B) de l'interface d'appui 6 (figure 10).

L'entrée 13 peut s'étendre le long d'un bord 5" de l'organe d'actionnement 5 (figures 7, 10, 11).

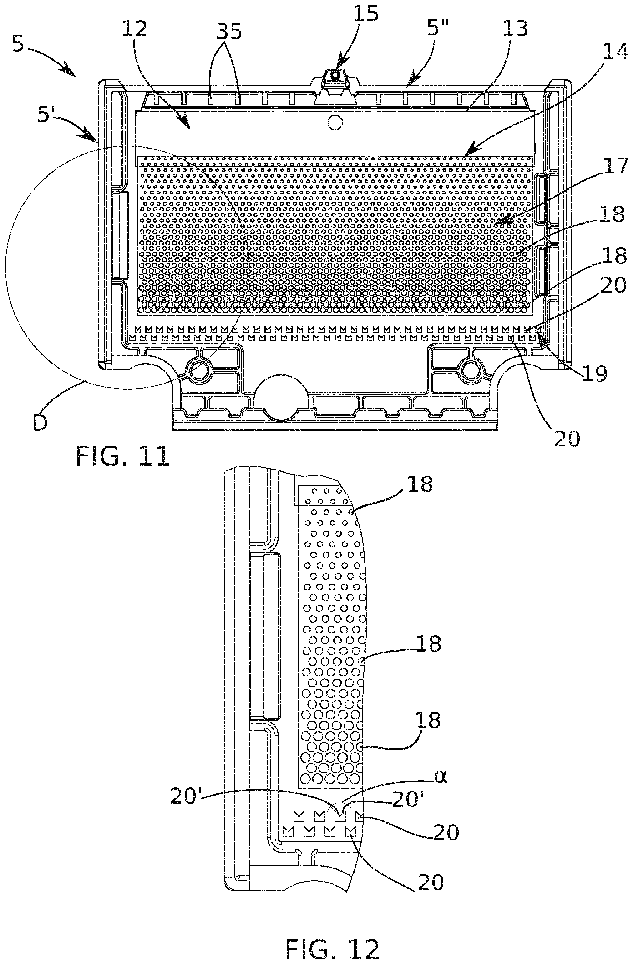

Le bord 5" peut comprendre une pluralité de nervures 35 pour le rigidifier (figure 11).

La première zone de guidage 12 peut être sensiblement incurvée par rapport au plan longitudinal de l'interface d'appui 6 (figure 10).

Préférentiellement, l'organe d'actionnement 5 peut être une pièce injectée, préférentiellement en un seul tenant. L'organe d'actionnement 5 peut être en matériau polymère, tel que du polycarbonate.

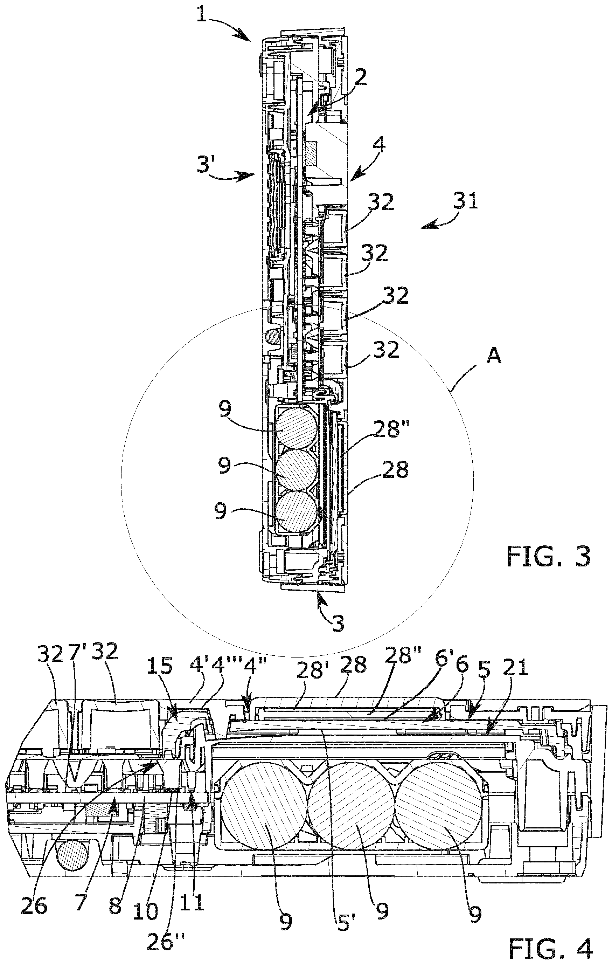

De préférence, l'actionneur 10 est déporté par rapport à l'ouverture traversante 4" et est disposé entre la paroi 4' de la façade d'interaction 4 et le support 8 de la carte électronique 7, et l'organe d'actionnement 5 peut comprendre une tige d'actionnement 15 s'étendant dans le prolongement de l'interface d'appui 6 et en regard d'une face interne 4'" de la paroi 4' de la façade d'interaction 4 et en direction de l'actionneur 10 pour transmettre une force sur l'actionneur 10 uniquement en position d'actionnement (figures 3 et 4).

L'actionneur 10 étant déporté par rapport à l'ouverture traversante 4", celui-ci n'est pas disposé à l'arrière de l'ouverture traversante 4" ou à l'arrière de l'interface d'appui 6. Avantageusement, cette configuration permet également de libérer de l'espace à l'arrière de l'interface d'appui 6. Il en résulte un encombrement limité à l'arrière de l'interface d'appui 6 dans le logement 2.

Préférentiellement, la tige d'actionnement 15 peut être saillante dans une direction sensiblement perpendiculaire par rapport au plan longitudinal de l'interface d'appui 6 et peut être orientée sensiblement perpendiculairement par rapport à l'actionneur 10 (figures 4 et 10).

La tige d'actionnement 15 peut être situé au niveau du bord 5" de l'organe d'actionnement 5 (figures 7, 10, 11).

L'appareil électronique peut comprendre une paroi étanche 21 disposée au moins en partie en regard de la face interne 4'" de la paroi 4' de façade d'interaction 4 et d'une face interne 5' de l'organe d'actionnement 5 pour étanchéifier la façade d'interaction 4 (figures 3 à 6 et 13 à 16B).

Avantageusement, la paroi étanche 21 permet de protéger la carte électronique 7 et le cas échéant l'alimentation électrique 9 notamment contre l'humidité, la pluie, ou la poussière. Il en résulte que l'appareil électronique est adapté à un usage en extérieur.

En effet, la paroi étanche 21 peut préférentiellement recouvrir une face 7' de la carte électronique 7 sur laquelle sont montés l'actionneur 10 et la source lumineuse 11 (figures 1, 4, 6).

Par ailleurs, l'organe d'actionnement 5 peut reposer sur la paroi étanche 21 au niveau de la face interne 5' de l'organe d'actionnement 5 (figures 1, 4, 6).

La paroi étanche 21 peut être en matériau transparent et/ou translucide et peut comprendre une deuxième zone de guidage optique 22 disposée entre la source lumineuse 11 et la paroi 4' de la façade d'interaction 4 pour transmettre directement le rayonnement lumineux émis par ladite au moins une source lumineuse 11 et entrant par une entrée 23 de la deuxième zone de guidage 22 disposée en regard de la source lumineuse 11, vers une sortie 24 de la deuxième zone de guidage 22 laquelle débouche en face de l'entrée 13 de la première zone de guidage 12 (figures 6, 13, 14, 16A, 16B).

Avantageusement, la paroi étanche 21 forme une pièce intermédiaire entre l'organe d'actionnement 5 et la source lumineuse 11. Ainsi, le rayonnement lumineux émis par la source lumineuse 11 est guidé de la source lumineuse 11 vers l'entrée 13 de la première zone de guidage 12. La transmission du rayonnement lumineux est ainsi augmentée. Par ailleurs, le rayonnement lumineux est transmis d'une zone étanche protégée par la paroi étanche 21 vers une zone non étanche à savoir l'organe d'actionnement 5.

Préférentiellement, la paroi étanche 21 peut être une pièce injectée, préférentiellement en un seul tenant. La paroi étanche 21 peut être en matériau polymère, tel que du polycarbonate.

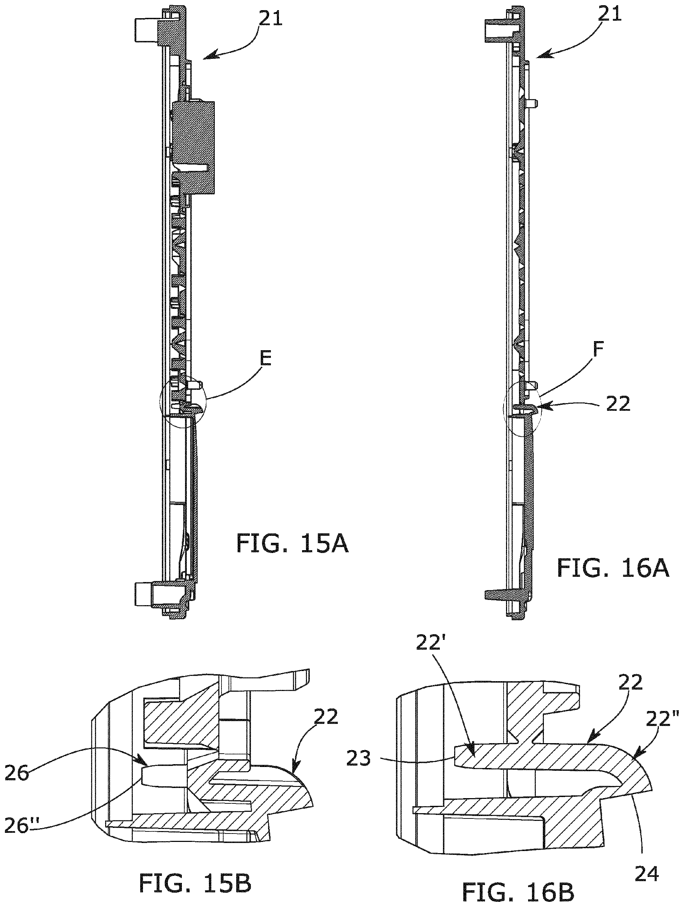

La deuxième zone de guidage 22 peut comprendre une première portion saillante 22' et une deuxième portion saillante 22" s'étendant sensiblement respectivement en saillie de part et d'autre de la paroi étanche 21, de sorte que la première portion saillante 22' peut comprendre à une première extrémité libre l'entrée 23 et que la deuxième portion saillante 22" peut comprendre à une deuxième extrémité libre la sortie 24 (figure 16B).

Préférentiellement, la deuxième portion saillante 22" de la deuxième zone de guidage 22 peut être courbée (figure 16B).

Préférentiellement, le rayon de courbure de la deuxième portion saillante 22" de la deuxième de zone de guidage 22 peut être maximal pour limiter les fuites de rayonnement lumineux.

Par ailleurs, la deuxième zone de guidage 22 peut comprendre une surface polie, préférentiellement du type poli optique pour limiter les fuites de rayonnement lumineux.

Une couche réfléchissante 25 peut être disposée sur une portion de la paroi étanche 21 en regard de la face interne 5' de l'organe d'actionnement 5 et dont la surface peut correspondre au moins à la surface de l'interface d'appui 6 de l'organe d'actionnement 5 (figures 1, 13, 14).

Avantageusement, la couche réfléchissante 25 permet de réfléchir le rayonnement lumineux guidé ou diffusé dans l'interface d'appui 6, en direction de l'ouverture traversante 4". Il en résulte une optimisation de la transmission du rayonnement lumineux.

La couche réfléchissante 25 peut consister en une étiquette blanche brillante pouvant être collée sur la paroi étanche 21.

La paroi étanche 21 peut comprendre une palette 26 mobile disposée au moins en partie entre la tige d'actionnement 15 de l'organe d'actionnement 5 et l'actionneur 10 pour transmettre la force exercée par la tige d'actionnement 15 sur la palette 26 à l'actionneur 10 (figures 4, 13, 14).

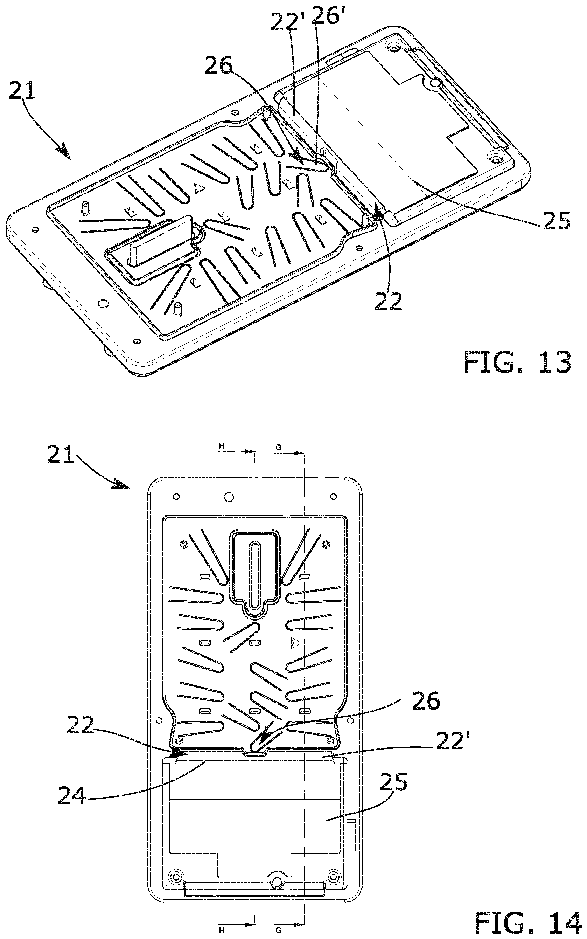

La palette 26 peut comprendre une languette 26' dont une première extrémité s'étend de la paroi étanche 21 et une deuxième extrémité libre et mobile par rapport à la paroi étanche 21. La deuxième extrémité libre peut comprendre une protubérance 26" pouvant venir en contact direct avec l'actionneur 10 (figures 13 et 15B).

Une membrane étanche 27 peut être interposée au moins entre la tige d'actionnement 15 et la palette 26 de la paroi étanche 21 (figure 1).

La membrane étanche 27 permet de protéger l'actionneur 10 de l'humidité, de la pluie et/ou de la poussière. Il en résulte que l'appareil électronique est adapté à un usage en extérieur.

La membrane étanche 27 peut également être interposée entre une partie de la paroi 4' de la façade d'interaction 4 et la paroi étanche 21, notamment lorsque cette partie de la paroi 4' comprend une interface homme-machine comme décrit ci-après, tel qu'un clavier, pour le protéger de l'humidité, de la pluie et/ou de la poussière (figure 1).

La membrane étanche 27 peut être en un matériau élastomère, tel que du silicone.

L'interface d'appui 6 peut comprendre une surface de diffusion 17 pour diffuser le rayonnement lumineux émergeant de la sortie 14 de la première zone de guidage 12 (figures 11 et 12).

Avantageusement, la surface de diffusion 17 permet de diffuser le rayonnement lumineux dans l'épaisseur de l'interface d'appui 6 et de répartir le rayonnement lumineux pour que l'éclairage de l'interface d'appui 6 soit homogène.

Préférentiellement, la surface de diffusion 17 est située sur une fraction de la face interne 5' de l'organe d'actionnement 5 (figure 11).

La surface de diffusion 17 peut comprendre un réseau optique muni d'une pluralité de motifs 18 grainés ou rugueux. Les motifs 18 peuvent être en creux ou en relief

Les motifs 18 peuvent présenter une forme circulaire (figures 11 et 12).

Les motifs 18 peuvent être disposés en quinconce (figures 11 et 12).

En outre, les motifs 18 peuvent présenter des tailles variables. Par exemple, la taille des motifs 18 peut croître en fonction de l'éloignement des motifs 18 relativement à la source lumineuse 11 (figures 11 et 12).

Par conséquent à proximité de la source lumineuse 11, le rayonnement lumineux est moins diffusé qu'à distance de la source lumineuse 11 où il est davantage diffusé du fait de l'accroissement du nombre de surfaces diffusantes.

L'organe d'actionnement 5 peut comprendre une surface réfléchissante 19 en face de la sortie 14 et à la périphérie de la surface de diffusion 17 pour réfléchir le rayonnement lumineux transmis directement par la sortie 14 vers la surface de diffusion 17 (figures 7, 8, 9, 11, 12).

Par conséquent, le rayonnement lumineux sortant de la sortie 14, et qui n'a pas été diffusé par la surface de diffusion 17 et renvoyé vers la surface de diffusion 17. Il en résulte une optimisation de la transmission du rayonnement lumineux en direction de la surface de diffusion 17.

Dans ce cas, la surface réfléchissante 19 peut comprendre une pluralité de réflecteurs 20 (figures 7, 8, 9, 11, 12).

Avantageusement, ces réflecteurs 20 augmentent la surface de réflexion disponible.

Préférentiellement, les réflecteurs 20 peuvent présenter au moins une surface polie 20', préférentiellement deux surfaces polies 20' pouvant former un angle α pouvant être égal à 90 degrés (figure 12). Les réflecteurs 20 peuvent être repartis selon une ou plusieurs rangées parallèles et préférentiellement deux rangées (figures 7, 11, 12). Les réflecteurs 20 de deux rangées adjacentes sont décalés pour maximiser la surface de réflexion disponible. En outre, les deux rangées de réflecteurs 20 peuvent être dans des plans distincts (figures 8 et 9).

Un porte-étiquette 28 peut être monté sur l'interface d'appui 6 de l'organe d'actionnement 5 et peut être disposé dans l'ouverture traversante 4" de la façade d'interaction 4 (figures 1 à 7 et 10).

Plus particulièrement, le porte-étiquette 28 peut reposer sur une face externe 6' de l'interface d'appui 6 et peut être monté de manière amovible sur celle-ci par des moyens de fixation 33, 33', 34, 34' (figures 4, 6, 7, 10).

Préférentiellement, le porte-étiquette 28 est en matériau transparent ou translucide et peut être une pièce injectée, préférentiellement en un seul tenant. Le porte-étiquette 28 peut être en matériau polymère, tel que du polycarbonate.

Par conséquent, le porte-étiquette 28 peut transmettre le rayonnement lumineux provenant de l'interface d'appui 6.

Le porte-étiquette 28 et l'interface d'appui 6 forment un logement qui peut comprendre une étiquette 28'. L'étiquette 28' peut être en polyéthylène qui présente l'avantage d'être résistante et imperméable.

Ce logement peut également comprendre un presse-étiquette 28" disposé entre l'étiquette 28' et la face externe 6' de l'interface d'appui 6 (figure 10).

Avantageusement, ce presse-étiquette 28"permet de maintenir et de garantir l'étanchéité de l'étiquette 28'.

Le presse-étiquette 28" peut consister en une membrane transparente ou translucide pour transmettre le rayonnement lumineux sous l'étiquette 28', préférentiellement en élastomère, tel que du silicone.

La carte électronique 7 peut comprendre une encoche traversante 29 apte et destinée à être traversée par l'alimentation électrique 9, l'ouverture traversante 4" de la façade d'interaction 4 et l'encoche traversante 29 de la carte électronique 7 peuvent être sensiblement alignées, et la source lumineuse 11 et/ou l'organe d'actionnement 5 peuvent être disposés le long d'une bord 30 de ladite encoche traversante 29 recouvert par la paroi 4' de la façade d'interaction 4 (figure 1).

Avantageusement, l'appareil électronique ne nécessite pas d'être branché sur le secteur, mais peut être autonome.

Une pluralité de sources lumineuses 11 peut être située le long du bord 30 (figure 1) pour augmenter le flux lumineux et illuminer l'entrée 13. Les sources lumineuses 11 peuvent être réparties selon un pas prédéterminé, pouvant être constant.

La façade d'interaction 4 peut comprendre une interface homme-machine 31 (figures 1, 2, 3).

L'appareil électronique peut dans ce cas consister en un clavier de commande d'un système d'alarme muni d'une sonnette.

Dans ce cas, l'interface homme-machine peut comprendre un clavier 31 comprenant une pluralité de touches 32.

L'interface homme machine peut comprendre une caméra (non représentée) et/ou un interphone (non représenté). L'appareil électronique peut dans ce cas consister en un interphone muni d'une sonnette ou une caméra muni d'une sonnette.

La source lumineuse 11 peut être choisie parmi une ou plusieurs LED (diode électroluminescente).

Préférentiellement, une pluralité de LED 11 est montée sur la carte électronique 7, par exemple quatre, sans que ce nombre ne soit limitatif (figure 1).

L'alimentation électrique 9 peut être une source d'électricité autonome ou rechargeable, telle qu'une pile ou une batterie.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil électronique, comprenant un boîtier (1) formant un logement (2) délimité au moins par une paroi périphérique (3), une façade de support (3') et une façade d'interaction (4),
la façade d'interaction (4) comprenant une paroi (4') dans laquelle est ménagée une ouverture traversante (4"), paroi (4') par rapport à laquelle un organe d'actionnement (5), apte et destiné à être relié à un avertisseur sonore, est monté mobile,
l'organe d'actionnement (5) comprenant une interface d'appui (6) obturant ladite ouverture traversante (4"),
ledit logement (2) recevant une carte électronique (7) comprenant un support (8) sur lequel est monté une pluralité de composants électroniques comprenant au moins un actionneur (10) et une source lumineuse (11) apte et destinée à émettre un rayonnement lumineux pour illuminer au moins en partie l'organe d'actionnement (5),
ladite carte électronique (7) étant apte et destinée à être reliée à et alimentée par une alimentation électrique (9) pour alimenter les composants électroniques (10, 11),
ledit organe d'actionnement (5) interagissant avec ledit actionneur (10) monté sur ladite carte électronique (7) et étant mobile par rapport audit actionneur (10) entre une position de repos dans laquelle l'actionneur (10) n'est pas actionné par l'organe d'actionnement (5) et une position d'actionnement dans laquelle l'actionneur (10) est actionné par l'organe d'actionnement (5),
ladite au moins une source lumineuse (11) étant déportée par rapport à l'ouverture traversante (4") de la paroi (4') de la façade d'interaction (4) et étant disposée entre la paroi (4') de la façade d'interaction (4) et le support (8) de la carte électronique (7),
l'organe d'actionnement (5) étant constitué d'au moins un matériau transparent ou translucide,
l'organe d'actionnement (5) comprenant une première zone de guidage (12) optique s'étendant dans le prolongement de l'interface d'appui (6) et en regard d'une face interne (4"') de la paroi (4') de la façade d'interaction (4) et en direction de la source lumineuse (11) pour transmettre un rayonnement lumineux émis par ladite au moins une source lumineuse (11) et entrant par une entrée (13) de la première zone de guidage (12) vers une sortie (14) de la première zone de guidage (12) laquelle débouche dans l'épaisseur de l'interface d'appui (6) pour éclairer ladite interface d'appui (6),
ledit appareil électronique est **caractérisé en ce que** l'actionneur (10) est déporté par rapport à l'ouverture traversante (4") et est disposé entre la paroi (4') de la façade d'interaction (4) et le support (8) de la carte électronique (7), et **en ce que** l'organe d'actionnement (5) comprend une tige d'actionnement (15) s'étendant dans le prolongement de l'interface d'appui (6) et en regard d'une face interne (4"') de la paroi (4') de la façade d'interaction (4) et en direction de l'actionneur (10) pour transmettre une force sur l'actionneur (10) uniquement en position d'actionnement.

2. Appareil électronique selon la revendication 1, **caractérisé en ce que** l'appareil électronique comprend une paroi étanche (21) disposée au moins en partie en regard de la face interne (4"') de la paroi (4') de façade d'interaction (4) et d'une face interne (5') de l'organe d'actionnement (5) pour étanchéifier la façade d'interaction (4).

3. Appareil électronique selon la revendication 2, **caractérisé en ce que** la paroi étanche (21) est en matériau transparent et/ou translucide et comprend une deuxième zone de guidage optique (22) disposée entre la source lumineuse (11) et la paroi (4') de la façade d'interaction (4) pour transmettre directement le rayonnement lumineux émis par ladite au moins une source lumineuse (11) et entrant par une entrée (23) de la deuxième zone de guidage (22) disposée en regard de la source lumineuse (11), vers une sortie (24) de la deuxième zone de guidage (22) laquelle débouche en face de l'entrée (13) de la première zone de guidage (12).

4. Appareil électronique selon la revendication 3, **caractérisé en ce que** la deuxième zone de guidage (22) comprend une première portion saillante (22') et une deuxième portion saillante (22") s'étendant sensiblement respectivement en saillie de part et d'autre de la paroi étanche (21), de sorte que la première portion saillante (22') comprend à une première extrémité libre l'entrée (23) et que la deuxième portion saillante (22") comprend à une deuxième extrémité libre la sortie (24).

5. Appareil électronique selon la revendication 4, **caractérisé en ce que** la deuxième portion saillante (22") de la deuxième zone de guidage (22) est courbée.

6. Appareil électronique selon l'une quelconque des revendications 2 à 5, **caractérisé en ce qu'**une couche réfléchissante (25) est disposée sur une portion de la paroi étanche (21) en regard de la face interne (5') de l'organe d'actionnement (5) et dont la surface correspond au moins à la surface de l'interface d'appui (6) de l'organe d'actionnement (5).

7. Appareil électronique selon l'une quelconque des revendications 2 à 6, **caractérisé en ce que** la paroi étanche (21) comprend une palette (26) mobile disposée au moins en partie entre la tige d'actionnement (15) de l'organe d'actionnement (5) et l'actionneur (10) pour transmettre la force exercée par la tige d'actionnement (15) sur la palette (26) à l'actionneur (10).

8. Appareil électronique selon la revendication 7, **caractérisé en ce qu'**une membrane étanche (27) interposée au moins entre la tige d'actionnement (15) et la palette (26) de la paroi étanche (21).

9. Appareil électronique selon l'une quelconque des revendications 1 à 8, **caractérisé en ce que** l'interface d'appui (6) comprend une surface de diffusion (17) pour diffuser le rayonnement lumineux émergeant de la sortie (14) de la première zone de guidage (12).

10. Appareil électronique selon la revendication 9, **caractérisé en ce que** la surface de diffusion (17) comprend un réseau optique muni d'une pluralité de motifs (18) grainés ou rugueux.

11. Appareil électronique selon l'une quelconque des revendications 9 à 10, **caractérisé en ce que** l'organe d'actionnement (5) comprend une surface réfléchissante (19) en face de la sortie (14) et à la périphérie de la surface de diffusion (17) pour réfléchir le rayonnement lumineux transmis directement par la sortie (14) vers la surface de diffusion (17).

12. Appareil électronique selon la revendication 11, **caractérisé en ce que** la surface réfléchissante (19) comprend une pluralité de réflecteurs (20).

13. Appareil électronique selon l'une quelconque des revendications 1 à 12, **caractérisé en ce qu'**un porte-étiquette (28) est monté sur l'interface d'appui (6) de l'organe d'actionnement (5) et est disposé dans l'ouverture traversante (4") de la façade d'interaction (4).

14. Appareil électronique selon l'une quelconque des revendications 1 à 13, **caractérisé en ce que** ladite carte électronique (7) comprend une encoche traversante (29) apte et destinée à être traversée par l'alimentation électrique (9), **en ce que** l'ouverture traversante (4") de la façade d'interaction (4) et l'encoche traversante (29) de la carte électronique (7) sont sensiblement alignées, et **en ce que** la source lumineuse (11) et/ou l'organe d'actionnement (5) sont disposés le long d'une bord (30) de ladite encoche traversante (29) recouvert par la paroi (4') de la façade d'interaction (4).

15. Appareil électronique selon l'une quelconque des revendications 1 à 14, **caractérisé en ce que** la façade d'interaction (4) comprend une interface homme-machine (31).

16. Appareil électronique selon la revendication 15, **caractérisé en ce que** l'interface homme-machine comprend un clavier (31) comprenant une pluralité de touches (32).

17. Appareil électronique selon l'une quelconque des revendications 1 à 16, **caractérisé en ce que** la source lumineuse (11) est choisie parmi une LED.

## Patentansprüche

1. Elektronisches Gerät mit einem Gehäuse (1), das ein Volumen (2) bildet, das zumindest durch eine Umfangswand (3), eine Trägerfront (3') und eine Interaktionsfront (4) abgrenzbar ist,
wobei die Interaktionsfront (4) eine Wand (4') aufweist, in der eine Durchgangsöffnung (4") vorgesehen ist, wobei in Bezug auf diese Wand (4') ein Betätigungselement (5), das mit einem Signalgeber verbindbar ist, beweglich montierbar ist,
wobei das Betätigungselement (5) eine Auflagefläche (6) aufweist, die die Durchgangsöffnung (4") verschließen kann,
wobei das Volumen (2) eine elektronische Platine (7) umfasst, die einen Träger (8) aufweist, auf dem eine Vielzahl von elektronischen Komponenten montierbar ist, die mindestens einen Aktuator (10) und eine Lichtquelle (11) aufweisen, die eine Lichtstrahlung aussenden kann, um das Betätigungselement (5) zumindest teilweise zu beleuchten,
wobei die elektronische Platine (7) geeignet ist, mit einer elektrischen Stromversorgung (9) verbunden und von dieser gespeist zu werden, um die elektronischen Komponenten (10, 11) zu speisen,
wobei das Betätigungselement (5) mit dem auf der elektronischen Platine (7) montierten Aktuator (10) zusammenwirkt und in Bezug auf den Aktuator (10) zwischen einer Ruheposition, in der der Aktuator (10) nicht durch das Betätigungselement (5) betätigt wird, und einer Betätigungsposition, in der der Aktuator (10) durch das Betätigungselement (5) betätigt wird, beweglich ist,
wobei die mindestens eine Lichtquelle (11) in Bezug auf die Durchgangsöffnung (4") der Wand (4') der Interaktionsfront (4) versetzt anordbar ist und zwischen der Wand (4') der Interaktionsfront (4) und dem Träger (8) der elektronischen Platine (7) anordbar ist,
wobei das Betätigungselement (5) mindestens ein transparentes oder transluzentes Material aufweist,
wobei das Betätigungselement (5) eine erste optische Führungszone (12) aufweist, die sich in der Verlängerung der Auflagefläche (6) und gegenüber einer Innenfläche (4"') der Wand (4') der Interaktionsfront (4) und in Richtung der Lichtquelle (11) im Wesentlichen erstreckt, um eine Lichtstrahlung zu übertragen, die von der mindestens einen Lichtquelle (11) emittierbar ist und über einen Einlass (13) der ersten Führungszone (12) zu einem Auslass (14) der ersten Führungszone (12) führbar ist, der sich im Wesentlichen in die Abmessungen der Auflagefläche (6) öffnet, um die Auflagefläche (6) zu beleuchten,
wobei das elektronische Gerät **dadurch gekennzeichnet ist, dass** der Aktuator (10) in Bezug auf die Durchgangsöffnung (4") versetzt anordbar ist und zwischen der Wand (4') der Interaktionsfront (4) und dem Träger (8) der elektronischen Platine (7) anordbar ist, und dass das Betätigungselement (5) eine Betätigungsstange (15) umfasst, die sich im Wesentlichen in der Verlängerung der Auflagefläche (6) erstreckt und einer Innenfläche (4"') der Wand (4') der Interaktionsfläche (4) und in Richtung des Aktuators (10) im Wesentlichen zugewandt ist,
wobei eine Kraft auf den Aktuator (10) in der Betätigungsstellung übertragbar ist.

2. Elektronisches Gerät nach Anspruch 1,
**dadurch gekennzeichnet, dass** das elektronische Gerät eine dichte Wand (21) aufweist, die zumindest teilweise gegenüber der Innenfläche (4" ') der Interaktionsfront (4) und einer Innenfläche (5') des Betätigungselements (5) zur Abdichtung der Interaktionsfront (4) angeordbar ist.

3. Elektronisches Gerät nach Anspruch 2,
**dadurch gekennzeichnet, dass** die dichte Wand (21) transparentes und/oder lichtdurchlässiges Material umfasst und eine zweite optische Führungszone (22) aufweist, die im Wesentlichen zwischen der Lichtquelle (11) und der Wand (4') der Interaktionsfront (4) anordbar ist, um die von der mindestens einen Lichtquelle (11) ausgesandte und durch einen Eingang (23) der zweiten Führungszone (22), die gegenüber der Lichtquelle (11) anordbar ist, eintretende Lichtstrahlung im Wesentlichen direkt zu übertragen, zu einem Auslass (24) der zweiten Führungszone (22), der sich im Wesentlichen gegenüber dem Einlass (13) der ersten Führungszone (12) öffnet.

4. Elektronisches Gerät nach Anspruch 3,
**dadurch gekennzeichnet, dass** die zweite Führungszone (22) einen ersten vorspringenden Abschnitt (22') und einen zweiten vorspringenden Abschnitt (22") aufweist, die sich im Wesentlichen jeweils beiderseits der dichten Wand (21) erstrecken, so dass der erste vorspringende Abschnitt (22') an einem ersten freien Ende den Eingang (23) und der zweite vorspringende Abschnitt (22") an einem zweiten freien Ende den Ausgang (24) aufweist.

5. Elektronisches Gerät nach Anspruch 4,
**dadurch gekennzeichnet, dass** der zweite vorspringende Abschnitt (22") der zweiten Führungszone (22) im Wesentlichen gekrümmt ist.

6. Elektronisches Gerät nach einem der Ansprüche 2 bis 5,
**dadurch gekennzeichnet, dass** auf einem der Innenfläche (5') des Betätigungselementes (5) zugewandten Abschnitt der dichten Wand (21) eine reflektierende Schicht (25) anordbar ist, deren Fläche mindestens der Fläche der Auflagefläche (6) des Betätigungselementes (5) entspricht.

7. Elektronisches Gerät nach einem der Ansprüche 2 bis 6,
**dadurch gekennzeichnet, dass** die dichte Wand (21) einen beweglichen Flügel (26) aufweist, der zumindest teilweise zwischen der Betätigungsstange (15) des Betätigungselementes (5) und dem Aktuator (10) anordbar ist, um die von der Betätigungsstange (15) auf den Flügel (26) ausgeübte Kraft auf den Aktuator (10) zu übertragen.

8. Elektronisches Gerät nach Anspruch 7,
**dadurch gekennzeichnet, dass** eine dichte Membran (27) zumindest zwischen der Betätigungsstange (15) und dem Flügel (26) der dichten Wand (21) anordbar ist.

9. Elektronisches Gerät nach einem der Ansprüche 1 bis 8,
**dadurch gekennzeichnet, dass** die Auflagefläche (6) eine Diffusionsfläche (17) zur Streuung der im Wesentlichen aus dem Ausgang (14) der ersten Führungszone (12) austretenden Lichtstrahlung aufweist.

10. Elektronisches Gerät nach Anspruch 9,
**dadurch gekennzeichnet, dass** die Diffusionsfläche (17) ein optisches Gitter umfasst, das mit einer Vielzahl von gekörnten oder rauen Mustern (18) versehen ist.

11. Elektronisches Gerät nach einem der Ansprüche 9 bis 10,
**dadurch gekennzeichnet, dass** das Betätigungselement (5) eine reflektierende Oberfläche (19) gegenüber dem Ausgang (14) und am Umfang der Diffusionsfläche (17) aufweist, um die direkt vom Ausgang (14) zur Diffusionsfläche (17) übertragene Lichtstrahlung zu reflektieren.

12. Elektronisches Gerät nach Anspruch 11,
**dadurch gekennzeichnet, dass** die reflektierende Oberfläche (19) eine Vielzahl von Reflektoren (20) umfasst.

13. Elektronisches Gerät nach einem der Ansprüche 1 bis 12,
**dadurch gekennzeichnet, dass** ein Etikettenhalter (28) an der Auflagefläche (6) des Betätigungselementes (5) angebracht und in der Durchgangsöffnung (4") der Interaktionsfront (4) anordbar ist.

14. Elektronisches Gerät nach einem der Ansprüche 1 bis 13,
**dadurch gekennzeichnet, dass** die elektronische Platine (7) eine Durchgangskerbe (29) aufweist, die so anpassbar ist, um von der Stromversorgung (9) im Wesentlichen durchquert zu werden, dass die Durchgangsöffnung (4") der Interaktionsfront (4) und die Durchgangskerbe (29) der elektronischen Platine (7) im Wesentlichen fluchtend anordbar sind, und dass die Lichtquelle (11) und/oder das Betätigungselement (5) entlang einer Kante (30) der Durchgangskerbe (29) anordbar sind, die von der Wand (4') der Interaktionsfront (4) abdeckbar ist.

15. Elektronisches Gerät nach einem der Ansprüche 1 bis 14,
**dadurch gekennzeichnet, dass** die Interaktionsfront (4) eine Mensch-Maschine-Schnittstelle (31) umfasst.

16. Elektronisches Gerät nach Anspruch 15,
**dadurch gekennzeichnet, dass** die Mensch-Maschine-Schnittstelle eine Tastatur (31) mit einer Vielzahl von Tasten (32) umfasst.

17. Elektronisches Gerät nach einem der Ansprüche 1 bis 16,
**dadurch gekennzeichnet, dass** die Lichtquelle (11) eine LED umfasst.

## Claims

1. Electronic apparatus, comprising a casing (1) forming a housing (2) delimited at least by a peripheral wall (3), a support facing (3') and an interaction facing (4),
the interaction facing (4) comprising a wall (4') in which there is formed a through opening (4"), a wall (4') relative to which an actuation member (5), capable of and intended to be linked to a buzzer, is movably mounted,
the actuation member (5) comprising a pressing interface (6) blocking said through opening (4"),
said housing (2) receiving an electronic circuit board (7) comprising a support (8) on which is mounted a plurality of electronic components comprising at least one actuator (10) and one light source (11) capable of emitting and intended to emit a light radiation to at least partly illuminate the actuation member (5),
said electronic circuit board (7) being capable of being linked and intended to be linked to and powered by an electrical power supply (9) to power the electronic components (10, 11),
said actuation member (5) interacting with said actuator (10) mounted on said electronic circuit board (7) and being mobile relative to said actuator (10) between an idle position in which the actuator (10) is not actuated by the actuation member (5) and an actuation position in which the actuator (10) is actuated by the actuation member (5),
said at least one light source (11) being offset relative to the through opening (4") of the wall (4') of the interaction facing (4) and being disposed between the wall (4') of the interaction facing (4) and the support (8) of the electronic circuit board (7), the actuation member (5) being composed of at least one transparent or translucent material,
the actuation member (5) comprising a first optical guiding zone (12) extending in the extension of the pressing interface (6) and opposite an inner face (4"') of the wall (4') of the interaction facing (4) and towards the light source (11) to transmit a light radiation emitted by said at least one light source (11) and entering through an input (13) of the first guiding zone (12) to an output (14) of the first guiding zone (12) which emerges in the thickness of the pressing interface (6) to light said pressing interface (6),
said electronic apparatus is **characterized in that** the actuator (10) is offset relative to the through opening (4") and is disposed between the wall (4') of the interaction facing (4) and the support (8) of the electronic circuit board (7), and **in that** the actuation member (5) comprises an actuation rod (15) extending in the extension of the pressing interface (6) and opposite an inner face (4"') of the wall (4') of the interaction facing (4) and towards the actuator (10) to transmit a force to the actuator (10) only in actuation position.

2. Electronic apparatus according to Claim 1, **characterized in that** the electronic apparatus comprises a sealed wall (21) disposed at least partly opposite the inner face (4"') of the wall (4') of the interaction facing (4) and an inner face (5') of the actuation member (5) to seal the interaction facing (4) .

3. Electronic apparatus according to Claim 2, **characterized in that** the sealed wall (21) is made of transparent and/or translucent material and comprises a second optical guiding zone (22) disposed between the light source (11) and the wall (4') of the interaction facing (4) to directly transmit the light radiation emitted by said at least one light source (11) and entering through an input (23) of the second guiding zone (22) disposed opposite the light source (11), to an output (24) of the second guiding zone (22) which emerges opposite the input (13) of the first guiding zone (12).

4. Electronic apparatus according to Claim 3, **characterized in that** the second guiding zone (22) comprises a first protruding portion (22') and a second protruding portion (22") extending substantially respectively protruding on either side of the sealed wall (21), such that the first protruding portion (22') comprises, at a first free end, the input (23) and that the second protruding portion (22") comprises, at a second free end, the output (24).

5. Electronic apparatus according to Claim 4, **characterized in that** the second protruding portion (22") of the second guiding zone (22) is curved.

6. Electronic apparatus according to any one of Claims 2 to 5, **characterized in that** a reflecting layer (25) is disposed on a portion of the sealed wall (21) opposite the inner face (5') of the actuation member (5) and the surface of which corresponds at least to the surface of the pressing interface (6) of the actuation member (5).

7. Electronic apparatus according to any one of Claims 2 to 6, **characterized in that** the sealed wall (21) comprises a mobile paddle (26) disposed at least partly between the actuation rod (15) of the actuation member (5) and the actuator (10) to transmit the force exerted by the actuation rod (15) on the paddle (26) to the actuator (10).

8. Electronic apparatus according to Claim 7, **characterized in that** a sealed membrane (27) interposed at least between the actuation rod (15) and the paddle (26) of the sealed wall (21).

9. Electronic apparatus according to any one of Claims 1 to 8, **characterized in that** the pressing interface (6) comprises a diffusion surface (17) for diffusing the light radiation emerging from the output (14) of the first guiding zone (12).

10. Electronic apparatus according to Claim 9, **characterized in that** the diffusion surface (17) comprises an optical network provided with a plurality of grainy or rough patterns (18).

11. Electronic apparatus according to either one of Claims 9 and 10, **characterized in that** the actuation member (5) comprises a reflecting surface (19) facing the output (14) and at the periphery of the diffusion surface (17) to reflect the light radiation transmitted directly by the output (14) to the diffusion surface (17) .

12. Electronic apparatus according to Claim 11, **characterized in that** the reflecting surface (19) comprises a plurality of reflectors (20).

13. Electronic apparatus according to any one of Claims 1 to 12, **characterized in that** a label-holder (28) is mounted on the pressing interface (6) of the actuation member (5) and is disposed in the through opening (4") of the interaction facing (4).

14. Electronic apparatus according to any one of Claims 1 to 13, **characterized in that** said electronic circuit board (7) comprises a through notch (29) capable of being and intended to be passed through by the electrical power supply (9), **in that** the through opening (4") of the interaction facing (4) and the through notch (29) of the electronic circuit board (7) are substantially aligned, and **in that** the light source (11) and/or the actuation member (5) are disposed along an edge (30) of said through notch (29) covered by the wall (4') of the interaction facing (4).

15. Electronic apparatus according to any one of Claims 1 to 14, **characterized in that** the interaction facing (4) comprises a human-machine interface (31).

16. Electronic apparatus according to Claim 15, **characterized in that** the human-machine interface comprises a keypad (31) comprising a plurality of keys (32) .

17. Electronic apparatus according to any one of Claims 1 to 16, **characterized in that** the light source (11) is chosen from an LED.
